# EUROPÄISCHE PATENTSCHRIFT

(11) **EP 3 315 679 B1**
(45) Veröffentlichungstag und Bekanntmachung des Hinweises auf die Patenterteilung: **25.12.2019**
(21) Anmeldenummer: 17197756.4
(22) Anmeldetag: 23.10.2017
(51) Int. Cl.: E04B 1/76, E04F 13/08, E04F 10/06, F16B 7/18, F16B 37/04, F16B 33/00

(54) **VERBINDUNGSSYSTEM**
CONNECTION SYSTEM
SYSTÈME DE LIAISON

(30) Priorität: 26.10.2016 DE 102016013154
(43) Veröffentlichungstag der Anmeldung: 02.05.2018
(73) Patentinhaber: Hertkorn, Regina, 74861 Neudenau (DE)
(72) Erfinder: Hertkorn, Regina, 74861 Neudenau (DE)
(74) Vertreter: Wimmer, Stephan

(56) Entgegenhaltungen:
- EP-A1- 2 873 784
- GB-A- 863 488
- US-A1- 2007 125 036

## Beschreibung

Die Erfindung betrifft ein Verbindungssystem mit einem Verbindungsmittel zur Verbindung von Anschlusselementen, insbesondere für wärmegedämmte Fassaden von Gebäuden.

### Stand der Technik

Bei isolierten Gebäude-, Fassaden-, Tür- oder Fensterkonstruktionen werden in unterschiedlichen Temperaturzonen angeordnete Bauelemente über Schrauben, Nieten o.dgl. miteinander verbunden. Dadurch kann eine sogenannte Kältebrücke entstehen, über die ein Wärmeabfluss von den wärmeren zu den kälteren Anschlusselementen erfolgt. Dadurch können die Isolations- und Wärmedämmeigenschaften beeinträchtigt werden.

Beim Errichten von Gebäuden ist es u.U. erforderlich, zwei lastaufnehmende Bauwerksteile wie Boden- oder Deckenplatten oder andere, insbesondere ebene und flächige Bauteile miteinander zu verbinden. Solche Bauwerksteile werden beispielsweise über eingegossene Bewehrungselemente miteinander verbunden. Bei einer Verbindung zwischen Außen- und Innenseite des Gebäudes kann darüber hinaus eine thermische und akustische Isolierung zwischen den beiden Bauteilen erforderlich sein.

Die EP 0 947 640 A2 offenbart ein thermisch isolierendes Bauelement. In der Zugzone angeordnete Zuganker und in der Druckzone angeordnete Druckanker nehmen die in einer Trennfuge wirkende, aus dem Biegemoment des überkragenden Bauwerksteils resultierenden Längskräfte auf. Ein weiteres Bewehrungselement ist zur Bildung eines Schubankers schlaufenförmig gebogen. Der schlaufenförmig gebogene Abschnitt liegt in der Zugzone, während die freien Enden unter Bildung von Schubabschnitten diagonal durch den Isolierkörper hindurchgeführt und gegenüberliegend in der Druckzone mit dem Druckanker verschweißt sind. Auf der Seite des überkragenden Bauwerksteils werden die wirkenden Querkräfte auf den Druckanker und dann von dort auf die Schubabschnitte des Schubankers übertragen.

Die Verbindung des Schubankers mit dem Druckanker ist aufwändig und benötigt ein ausreichendes Bauvolumen.

Die GB 863 488 A offenbart ein Verbindungssystem mit den Merkmalen des Oberbegriffes des Anspruchs 1 in Form einer Stützvorrichtung für abgehängte Decken, Wandhalterungen und dergleichen, die einen Metallkanal mit innenliegendem Schwalbenschwanzabschnitt, eine Mutter mit mindestens zwei relativ konvergenten gegenüberliegenden Seiten, die so angepasst sind, dass sie in die inneren konvergenten Flächen des Metallkanals eingreifen, wenn sich die Mutter in dem Kanal befindet, und eine Schraube, die zu der Mutter komplementär ist, umfasst, wobei die Schraube so angepasst ist, dass sie gegen das Joch des Kanals drückt und wenn sie so drückt, dass sie die konvergenten Seiten der Mutter gegen die inneren konvergenten Flächen des Kanals klemmt.

Die Ausführungen der EP 2 873 784 A1 betreffen eine Beabstandungsvorrichtung mit einem Befestigungsmittel zur Befestigung der Beabstandsvorrichtung am Tragwerk eines Gebäudes. Das Befestigungsmittel ist radial beabstandet zu einer Mittenlängsachse der Beabstandungsvorrichtung angeordnet, so dass ein erster, einem Baugrund zugewandter Anlagebereich größer ist als ein zweiter, dem Baugrund abgewandter Anlagebereich.

Die Offenbarung der US 2007/0125036 A1 betrifft eine Dichtungsabdeckung für eine Befestigungsvorrichtung zur beabstandeten Befestigung eines Objekts an einer Baukomponente, die eine Grundplatte mit einer Durchgangsöffnung für ein Verankerungselement der Befestigungsvorrichtung und mindestens einer Einlassöffnung und einen ersten umlaufenden Steg, der von der Grundplatte vorsteht und damit einen Aufnahmeraum zur zumindest teilweisen Aufnahme eines Abstandelements der Befestigungsvorrichtung bildet, umfasst.

Aufgabe der Erfindung ist es daher, ein Verbindungssystem mit einem Verbindungsmittel für Anschlusselemente zur Verfügung zu stellen, das eine thermisch isolierende Verbindung dieser Anschlusselemente ermöglicht.

### Offenbarung der Erfindung

Es wird ein Verbindungssystem zur Verbindung eines Anschlusselements mit einem insbesondere wärmegedämmten Gebäude aus einer Kombination einer Einschubplatte mit einem Grundprofil und einem Verbindungsmittel, das als Element zur Zugkraftaufnahme ausgebildet ist, zum Anschlusselement offenbart. Das Verbindungssystem ist lastabtragend und als thermisch getrenntes System ausgebildet, das die Anbringung und Sicherung von Anbauteilen ermöglicht.

Dabei wird in einem ersten Ausführungsbeispiel ein Grundprofil mit mindestens einem Befestigungsmittel, insbesondere einem Dübel, mit dem Gebäude oder der Unterkonstruktion des Gebäudes verbunden. Das Grundprofil kann als Tragschiene, beispielsweise aus Metall oder Leichtmetall wie Aluminium, ausgebildet sein. Wird das Grundprofil insbesondere in einer mittigen Positionierung durch einen oder mehrere Dübel mit der Unterkonstruktion verbunden, weist diese Verbindung eine Zugkraft auf, die es erlaubt, eine Verbindung beispielsweise mit einer Unterkonstruktion zu ermöglichen.

Das Grundprofil ist so ausgebildet, dass es zur Aufnahme bzw. zum Einschieben einer verschieblich einzubringenden Einschubplatte geeignet geformt und ausgebildet ist. Das Grundprofil kann horizontal oder vertikal am Gebäude angeordnet werden, je nachdem, welche Anschlusselemente am Gebäude angeordnet werden sollen. Die Einschubplatte kann variabel in gewählten Positionen am Trag- bzw. Grundprofil angeordnet werden und ist somit frei positionierbar. Die Einschubplatte kann ein Loch für das Verbindungsmittel oder mehrere Löcher aufweisen.

Zwischen dem Grundprofil und dem Anschlusselement, das mit der Unterkonstruktion verbunden werden soll, ist ein Druckkörper bzw. druckfester Dämmkörper ausgebildet bzw. angeordnet. Dieser Druckkörper oder druckfeste Dämmkörper ist ein druckfestes Abstandselement, das die Funktion einer thermischen Trennung aufweist und dadurch eine dämmende Funktion hat. Der druckfester Dämmkörper muss nicht durchgehend ausgebildet sein. Er kann beliebig positioniert werden. Eine Anordnung in Abschnitten der Einschubplatte ist für viele Anwendungen ausreichend. Der druckfester Dämmkörper kann ein- oder mehrteilig ausgebildet sein. Der druckfester Dämmkörper kann aus Verbundmaterial, Holz und/oder Kunststoffen ausgebildet sein. Der druckfester Dämmkörper ist üblicherweise auf Druck ausgelegt.

Über ein Verbindungsmittel, insbesondere ein Zugelement bzw. ein Element zur Zugkraftaufnahme, beispielsweise eine Gewindestange, kann die Verbindung des Grundprofils über das thermische Trennelement mit dem zu verbindenden Anschlusselement erfolgen und damit thermisch entkoppeln. Das Element zur Zugkraftaufnahme ist für Beanspruchungen auf Zug ausgelegt. Das Element zur Zugkraftaufnahme kann in einer Ausbildung als ein Element ausgebildet sein. Dieses Element kann in einer abweichenden Ausbildung geteilt mit einer Schraubhülse ausgebildet sein. Sie kann insbesondere mit einer Senkkopfschraube mit einer Verbindungshülse verbindbar sein.

Das Grundprofil kann für eine einzige Einschubplatte ausgebildet sein oder es können mehrere Einschubplatten eingeschoben und insbesondere horizontal, aber auch vertikal angeordnet werden. Die Einschubplatte ist verschiebbar und variabel positionierbar. Das Grundprofil kann aus Metall oder Leichtmetall, insbesondere Aluminium, ausgebildet sein. Das Grundprofil ist in einer Öffnung im Wärmeverbundsystem eingesetzt. Das Grundprofil ist angebohrt, so dass das Anbauteil variabel anbringbar ist.

Das Anschlusselement bzw. Bauteil, das mit dem Grundprofil verbunden werden soll, kann bei der Ausbildung mit nur einer Einschubplatte insbesondere eine Leuchte, eine Markise, eine Halterung für ein kleineres Element wie beispielsweise ein Basketballkorb o.dgl. sein. Dies wird dadurch ermöglicht, dass die Einschubplatte durch ihre Verschieblichkeit flexibel innerhalb des Grundprofils anordenbar ist. Werden mehrere Einschubplatten nebeneinander angeordnet, können die zu verbindenden Bauteile beispielsweise ein Geländersystem, ein Vordach bzw. deren Teile o.dgl. sein. Es können beliebig viele Einschubplatten eingeschoben bzw. angeordnet sein. Beispielsweise kann ein Profil angeordnet werden, in das eine Glasscheibe einsetzbar ist, und somit ein Glasvordach ausgebildet werden.

Wird die Einschubplatte in ihrem Grundprofil in vertikaler Richtung am Gebäude oder der Unterkonstruktion angeordnet, kann sie beispielsweise zur Anordnung von Fassadenteilen, Französischen Balkonen, Vordächern, Ganzglasscheiben, Geländern, Brüstungselementen, Windfanganlagen o.dgl. dienen.

Direkt oder über eine Verschraubungs- bzw. Verbindungshülse ist das Element zur Zugkraftaufnahme mit dem an dem druckfester Dämmkörper anzuordnenden Anschlusselement verbunden. Das Anschlusselement wird insbesondere durch eine Schraube mit der Verbindungshülse bzw. der Schubstange verbunden. Innerhalb der Verbindungshülse kann ein Luftraum ausgebildet sein.

In einem zweiten Ausführungsbeispiel kann die Einschubplatte in Ausnehmungen eines thermischen thermisches Trennelements, insbesondere eines U- oder winkelförmig gestalteten, druckstabilen thermischen Trennelements, insbesondere aus Kunststoff, des Grundprofils eingeschoben werden. Die Einschubplatte weist mehrere Löcher auf, in die das Verbindungsmittel, also das Element zur Zugkraftaufnahme wie die Zugstange bzw. Gewindestange, eingeschraubt wird. Das thermischenTrennelement kann unterschiedliche Formen aufweisen und beispielsweise in anderen Profilformen, L-förmig, oder als Hülse mit einem Unterlegelement, das nicht aus Stahl ausgebildet, also thermisch trennend ist, ausgestaltet sein.

Zur Führung und Stabilisierung sind in einem Ausführungsbeispiel Nasen für das druckstablile thermisches Trennelement ausgebildet. Die beschriebene Ausführung eignet sich insbesondere für Markisen oder Vordächer.

Das erfindungsgemäße Verbindungssystem mit dem Verbindungsmittel in Kombination mit dem Grundprofil und der Einschubplatte hat dabei den Vorteil, dass eine sichere Verbindung eines Anschlusselements zum Baukörper mit oder ohne Unterkonstruktion erzielt wird. Die Zug- und Druckkräfte sind durch die Verschieblichkeit der Einschubplatte bzw. -platten aufnehmbar. Es entsteht insbesondere durch die Anordnung des thermischen Trennelements und des druckfesten Dämmkörpers ein thermisch getrenntes Bauteil, wodurch der Innen- gegenüber der Außenbefestigung des Verbindungselements entkoppelt wird. Diese beiden Befestigungsteile sind dadurch thermisch isoliert ausgebildet. Dadurch entsteht eine hohe Flexibilität bei der Anordnung. Diese Konstruktion ist auch bei einem Brandfall stabil. Das Verbindungssystem kann nicht herunterfallen, da sich die Einschubplatte selbst bei Veränderungs- bzw. Schmelzvorgängen der anderen Teile verkantet und die gesamte Konstruktion auf diese Weise sichert. Die Anbauelemente sind somit konstruktiv gegen Herunterfallen gesichert.

Durch den Einsatz der thermischen Trennelemente, insbesondere von Kunststoffwinkeln, sind die metallischen Teile nicht direkt miteinander verbunden bzw. liegen nicht aneinander, sondern thermisch konstruktiv durch die nicht-metallischen Zwischenelemente entkoppelt und voneinander getrennt.

Weitere Vorteile und vorteilhafte Ausgestaltungen der Erfindung sind der nachfolgenden Figurenbeschreibung, den Zeichnungen und den Ansprüchen entnehmbar.

Nachfolgend wird ein Ausführungsbeispiel der erfindungsgemäßen Lösung anhand der beigefügten schematischen Zeichnungen näher erläutert. Es zeigen:
- Fig. 1: zeigt einen Längsschnitt durch ein Verbindungssystem mit einer Kombination von Grundprofil, Einschubplatte und Verbindungsmittel,
- Fig. 2: zeigt eine Ansicht des Grundprofils,
- Fig. 3: stellt einen Längsschnitt durch ein Verbindungssystem mit einem thermischen Trennelement sowie einer Verbindungshülse dar,
- Fig. 4: zeigt die Darstellung eines Verbindungsmittels ohne Verbindungshülse,
- Fig. 5: stellt das Verbindungssystem mit linear angeordneten Dübeln und Verbindungsmitteln in einer transparenten Schrägansicht von vorne dar,
- Fig. 6: zeigt die Anordnung eines Verbindungssystems mit dem Grundprofil mit untereinander angeordneten Dübeln und einem geteilten druckfesten Dämmkörper,
- Fig. 7: stellt das Grundprofil nach Fig. 6 dar,
- Fig. 8: zeigt das Verbindungssystem in einer transparenten Schrägansicht und
- Fig. 9: zeigt das Grundprofil mit einer verschiebbaren Einschubplatte.

Die Angabe "n" ist als stellvertretende Angabe der Anzahl einzelner Merkmale zu verstehen und ersetzt in einigen Ausführungen der Figuren die ', ", ''' usw.

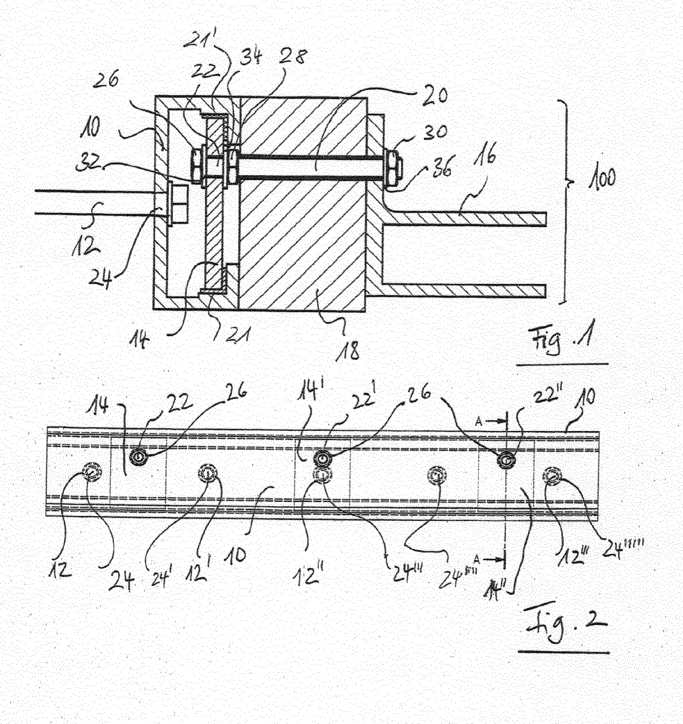

In Fig. 1 ist ein Verbindungssystem 100 dargestellt. Das Verbindungssystem 100 weist ein Grundprofil 10 auf. Das Grundprofil 10 ist mit mindestens einem Befestigungsmittel 12, in dieser Ausführung einem Dübel 12, mit einer Unterkonstruktion (hier nicht dargestellt) verbunden. Die Verbindung kann auch direkt mit dem Gebäude ausgeführt sein. Das Grundprofil 10 kann als Tragschiene 10, beispielsweise aus Aluminium, ausgebildet sein. Wird das Grundprofil 10 insbesondere in etwa mittig durch einen Dübel 12 mit der Unterkonstruktion verbunden, weist diese Verbindung eine Zugkraft auf, die es erlaubt, eine Verbindung beispielsweise mit einem Glasbeton zu ermöglichen. Das Verbindungssystem 100 ist in einer Öffnung in einem Wärmeverbundsystem eingesetzt.

Das Grundprofil 10 ist so ausgebildet, dass es zum Einschieben einer verschieblich gelagerten Einschubplatte 14 geeignet geformt und ausgebildet ist.

Zwischen dem Grundprofil 10 und einem Anschlusselement 16, das mit der Unterkonstruktion verbunden werden soll, ist ein druckfester Dämmkörper 18 angeordnet. Dieser druckfeste Dämmkörper 18 ist ein druckfestes Abstandselement 18, das eine thermische Trennfunktion übernimmt. Der druckfeste Dämmkörper 18 muss nicht durchgehend ausgebildet sein. Eine Anordnung in Abschnitten der Einschubplatte 14 ist für viele Anwendungen ausreichend.

Der druckfeste Dämmkörper 18 ist in dieser Ausführung einteilig ausgebildet. Der druckfeste Dämmkörper kann aus Verbundmaterial, Holz und/oder Kunststoffen ausgebildet sein. Der druckfeste Dämmkörper ist im Normalfall auf Druck ausgelegt. Insbesondere, wenn ein Fall auftritt, bei dem der druckfeste Dämmkörper verklebt angeordnet ist, ist dieser dadurch auf Zug und Druck ausgelegt.

Über ein Verbindungsmittel 20, das als Element zur Zugkraftaufnahme 20, insbesondere als Zugstange 20 ausgebildet ist, kann die Verbindung des Grundprofils 10 mit dem zu verbindenden Bauteil 16 erfolgen. Die Zugstange 20 ist auf Zug ausgelegt. Es erfolgt insbesondere keine Biegung dieses Verbindungsmittels 20. Die Zugstange 20 ist in dieser Ausbildung als ein durchgehendes Element ausgebildet.

Das Grundprofil 10 kann für eine einzige Einschubplatte 14 ausgebildet sein oder es können mehrere Einschubplatten 14, 14', 14", 14n, eingeschoben angeordnet werden. Das Grundprofil 10 kann aus Metall oder Leichtmetall, insbesondere Aluminium, ausgebildet sein. Die Einschubplatte 14, 14', 14", 14n ist ebenfalls aus Metall oder Leichtmetall ausgebildet und weist ein Loch 22 zur Durchführung des Elements zur Zugkraftaufnahme 20 auf. Dieses Element zur Zugkraftaufnahme 20 ist beispielsweise eine Zug- oder Gewindestange und weist Muttern 26, 28, 30 auf, die jeweils auf Unterlegscheiben 32, 34, 36 anliegen. Zwischen dem Grundprofil 10 und der Einschubplatte 14 sind thermisch trennende Trennelemente 21, 21' angeordnet. Die thermischen Trennelemente 21, 21' sind für die Funktion der thermischen Trennung aus Kunststoff oder anderen geeigneten Materialien ausgebildet.

Das Anschlusselement 16, das mit dem Grundprofil 10 verbunden werden soll, kann bei der Ausbildung mit nur einer Einschubplatte 14 insbesondere eine Leuchte, eine Markise, eine Halterung für ein kleineres Element wie beispielsweise ein Basketballkorb o.dgl. sein. Dies wird dadurch ermöglicht, dass die Einschubplatte 14 durch ihre Verschieblichkeit flexibel anordenbar ist. Werden mehrere Einschubplatten 14, 14', 14" horizontal nebeneinander angeordnet bzw. eingeschoben, können die zu verbindenden Anschlusselemente 16 beispielsweise ein Geländersystem, ein Vordach o.dgl. sein. Es können beliebig viele Einschubplatten 14, 14', 14", 14n eingeschoben bzw. angeordnet sein.

Fig. 2 zeigt eine transparente Ansicht auf das Grundprofil 10. Dabei weist der Grundkörper 10 Öffnungen 24, 24', 24", 24'", 24"" und 24"", 24n für Dübel 12, 12', 12", 12'", 12n auf. Die Öffnungen 24, 24', 24", 24'", 24"" und 24"" sind in etwa mittig am Grundkörper 10 angeordnet. Des Weiteren sind die Löcher 22, 22', 22" der Einschubplatten 14, 14', 14" dargestellt. Die Öffnungen 24, 24', 24" und die Löcher 22, 22', 22" können senkrecht übereinander angeordnet oder schräg zueinander alternierend oben oder unten angeordnet sein.

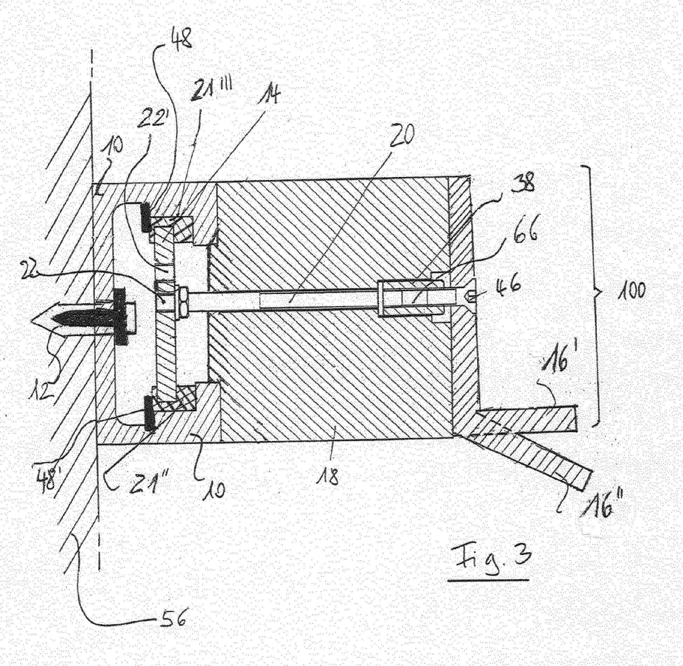

In Fig. 3 ist das Verbindungssystem 100 mit einem thermischen Trennelement 42 sowie einer Verbindungshülse 38 dargestellt. Die Einschubplatte 14 weist mehrere Löcher 22, 22' auf. Die Zugstange 20 ist in dieser Ausbildung geteilt mit der Verbindungs- bzw. Schraubhülse 38 ausgebildet. Sie kann insbesondere mit einer Senkkopfschraube 46 zur Verbindung des Anschlusselements 16' oder 16" mit der Einschubplatte 14 dienen. Es kann des Weiteren ein Luftraum 66 ausgebildet sein. Alternativ zum Luftraum 66 kann ein thermisches Füllelement ausgebildet sein.

Das thermische Trennelement 21' sowie 21" ist druckstabil ausgebildet. In dieser Ausführung weist es eine U-Form auf, kann aber auch jede andere Ausformung annehmen. Es sind am Grundprofil 10 Nasen 48, 48' ausgebildet, um einen festen Halt für die thermischen Trennelemente 21', 21" zu gewährleisten. Die thermischen Trennelemente 21', 21" sind aus thermisch trennendem Material ausgebildet, also beispielsweise aus Schaumkunststoff, Kunststoff, Holz, Kork o.dgl.

In diesem Ausführungsbeispiel reicht der druckfeste Dämmkörper 18 in das Grundprofil 10 hinein.

Die Anschlusselemente 16', 16", die mit der Senkkopfschraube 46 an dem druckfesten Abstandselement bzw. dem druckfesten Dämmkörper 18 angeordnet sind, können, beispielhaft genannt, Markisen, Vordächer oder Geländersysteme sein.

Das Grundprofil 10 ist mit seinem zu einem Gebäude hin zeigenden Rücken mit einer Unterkonstruktion 56 verbunden. Diese Verbindung wird durch das Verbindungsmittel 12 erzielt.

In diesem Ausführungsbeispiel sind am Grundelement 10 Nasen 48, 48' ausgebildet. Diese Nasen 48, 48' dienen der Abstützung und Führung der thermischen Trennelemente 21" und 21'''.

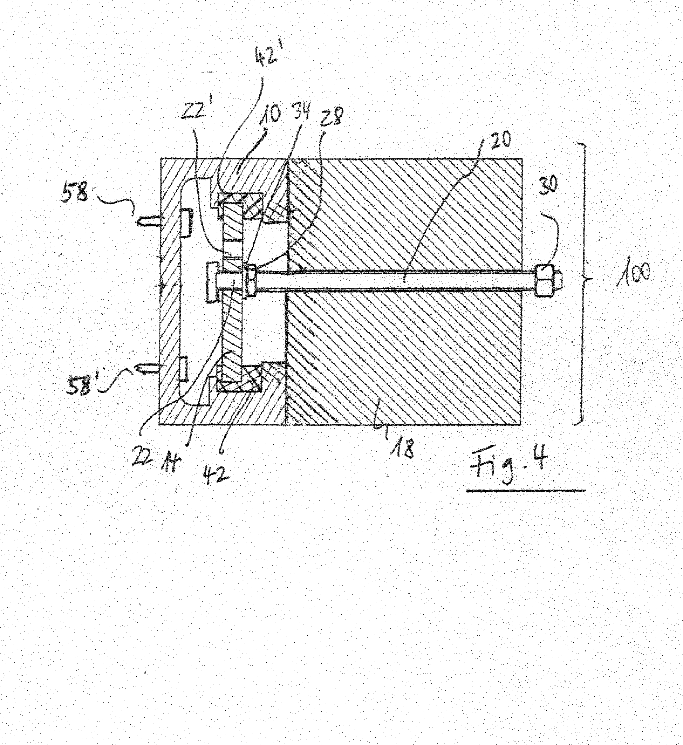

Fig. 4 stellt das Verbindungssystem 100 mit einem einteiligen druckfesten Abstandselement, dem druckfesten Dämmkörper 18, dar. Der druckfeste Dämmkörper 18 dient der Wärmeisolierung bzw. der Verhinderung von Kältebrücken. Das Grundprofil 10 ist mit zwei Dübeln 58, 58' an einer Unterkonstruktion befestigt. Die Dübel 58, 58' sind jeweils nicht mittig am Grundprofil 10 angeordnet, sondern in einem oberen und unteren Bereich.

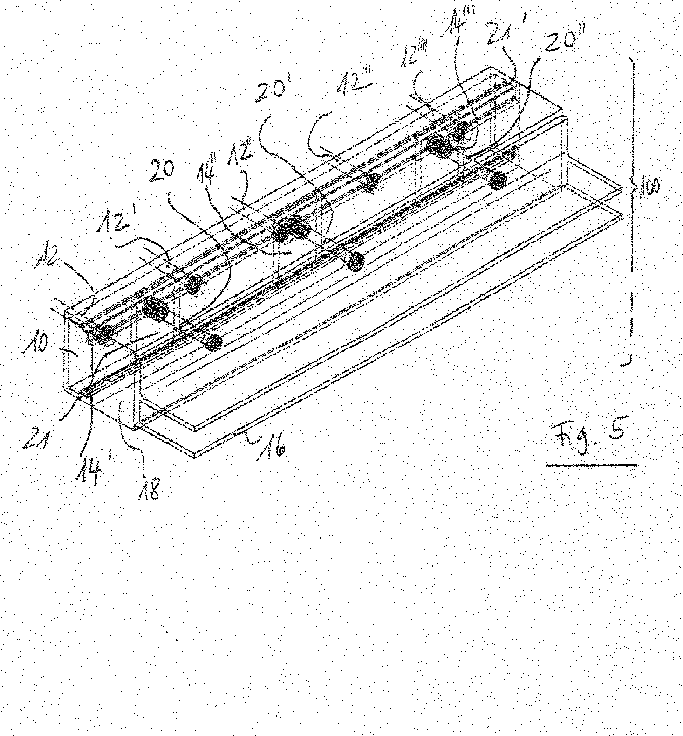

In Fig. 5 ist eine transparente Schrägansicht des Verbindungssystems 100 dargestellt. Dabei wird deutlich, wie - nur beispielhaft dargestellt - das Anschlusselement 16 über Verbindungsmittel 20, 20', 20", die jeweils durch die Einschubplatten 14', 14", 14'" hindurchgeführt sind, angeordnet wird. Das Grundprofil 10 kann über die Dübel 12, 12', 12", 12'" an einer Unterkonstruktion oder dem Gebäude befestigt werden. Es wird anschaulich verdeutlicht, dass mehrere, nicht durchgehende Einschubplatten 14', 14", 14''' im Grundprofil 10 angeordnet sind.

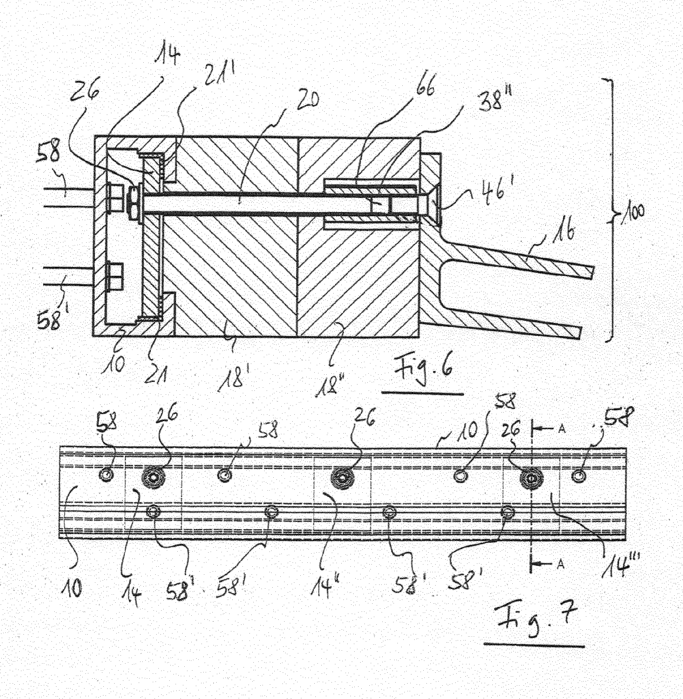

Fig. 6 stellt das Verbindungssystem 100 in einer Ausbildung mit einem zweiteiligen druckfesten Dämmkörper 18', 18" dar. Die Verbindung des Anschlusselements 16 erfolgt über das Element zur Zugkraftaufnahme 20, das in dieser Ausbildung eine Senkkopfschraube 46' sowie eine Verbindungshülse 38" aufweist. Innerhalb der Verbindungshülse 38" ist ein Luftraum 66 ausgebildet.

Fig. 7 zeigt die Anordnung von Einschubplatten 14, 14', 14" im Grundprofil 10 sowie die Anordnung der Dübel 58 sowie 58' sowie der Muttern 26.

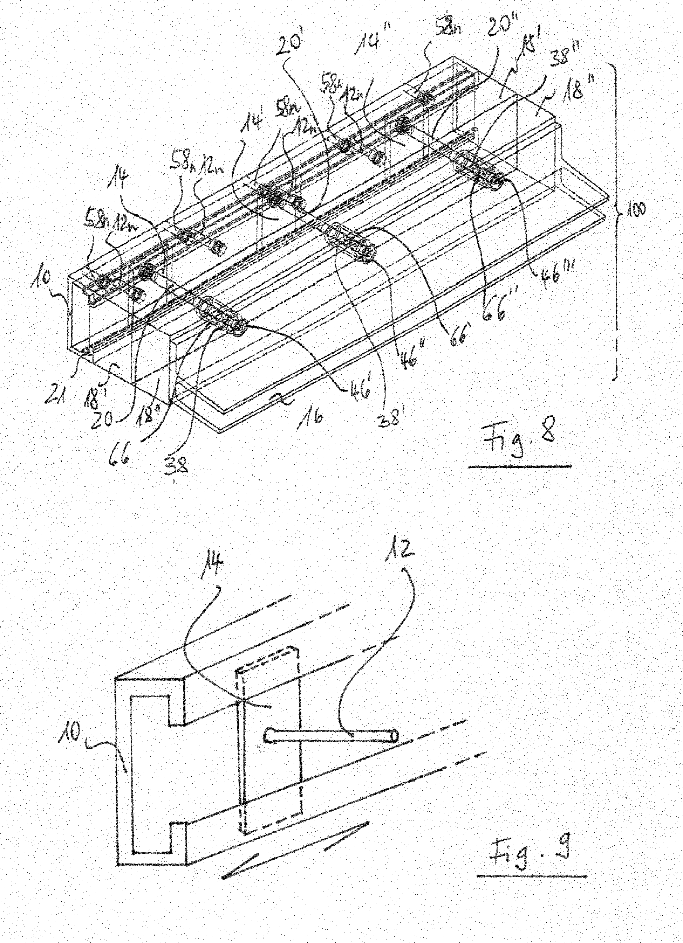

In Fig. 8 zeigt die transparente Schrägansicht des Verbindungssystems 100. Dabei weist das Verbindungsmittel 20, 20', 20", das mit einer Senkkopfschraube 46' mit dem druckfesten Dämmkörper 18" verbunden ist, eine Verbindungshülse 38, 38', 38" auf. Es ist ein Luftraum 66 ausgebildet. Dübel 12 n und 58 n sind versetzt zueinander an dem Grundprofil 10 angeordnet. Die Dübel 12 n sind in etwa mittig bzw. entlang einer in Längserstreckung gedachten Mittellinie im Grundprofil 10 ausgebildet und die Dübel 58 n sind in einem oberen Teil des Grundprofils 10 angeordnet, weshalb in dieser Darstellung die Dübel schematisch jeweils mit "12 n" sowie "58 n" in der Figur bezeichnet werden, ohne weiter zu differenzieren. Das Anschlusselement 16 kann ein Vordach- oder ein Geländerprofil sein. Bei Geländern dient die vorliegende Ausbildung des Verbindungssystems 100 der thermischen Trennung von einer Dachterrasse.

In Fig. 9 ist die in das Grundprofil 10 eingeschobene Einschubplatte 14 dargestellt, die jeweils in der angegebenen Pfeilrichtung im Grundprofil 10 entlang verschoben bzw. verstellt werden kann. An der Einschubplatte 14 ist das Befestigungsmittel 12 angeordnet.

Alle in der Beschreibung, den nachfolgenden Ansprüchen und den Zeichnungen dargestellten Merkmale können sowohl einzeln als auch in beliebiger Kombination miteinander erfindungswesentlich sein.

### Bezugszeichenliste

- 10: Grundprofil
- 12: Befestigungsmittel
- 12': Befestigungsmittel
- 12": Befestigungsmittel
- 12"': Befestigungsmittel
- 14: Einschubplatte
- 14': Einschubplatte
- 14": Einschubplatte
- 16: Anschlusselement
- 16': Anschlusselement
- 16": Anschlusselement
- 18: druckfester Dämmkörper
- 18': druckfester Dämmkörper
- 18": druckfester Dämmkörper
- 20: Element zur Zugkraftaufnahme
- 20': Element zur Zugkraftaufnahme
- 20": Element zur Zugkraftaufnahme
- 21: thermisches Trennelement
- 21': thermisches Trennelement
- 21": thermisches Trennelement
- 21''': thermisches Trennelement
- 22: Loch Einschubplatte
- 22': Loch Einschubplatte
- 24: Öffnung
- 24': Öffnung
- 24": Öffnung
- 24''': Öffnung
- 24'''': Öffnung
- 24''''': Öffnung
- 26: Mutter
- 28: Mutter
- 30: Mutter
- 32: Unterlegscheibe
- 34: Unterlegscheibe
- 36: Unterlegscheibe
- 38: Verbindungshülse
- 38': Verbindungshülse
- 38": Verbindungshülse
- 42: thermisches Trennelement
- 42': thermisches Trennelement
- 46: Schraube
- 46': Schraube
- 46": Schraube
- 46'": Schraube
- 48: Nase
- 48': Nase
- 56: Unterkonstruktion
- 58: Befestigungsmittel
- 58': Befestigungsmittel
- 58": Befestigungsmittel
- 58'": Befestigungsmittel
- 66: Luftraum

- n: Anzahl

- 100: Verbindungssystem

## Patentansprüche

1. Verbindungssystem (100) zur Verbindung eines Anschlusselements (16) mit einem Gebäude oder einer Unterkonstruktion (56), wobei ein Grundprofil (10) mit dem Gebäude oder der Unterkonstruktion (56) durch Befestigungsmittel (12, 12n) verbunden ist, und das Grundprofil (10) mindestens eine Einschubplatte (14, 14', 14") aufweist, die über ein Element zur Zugkraftaufnahme (20, 20', 20") mit dem Anschlusselement (16) verbindbar ist, und dass zwischen dem Grundprofil (10) und dem Anschlusselement (16) ein druckfester Dämmkörper (18, 18', 18") angeordnet ist, so dass ein Kräftepaar entsteht, bei dem die Zugkraft vom Element zur Zugkraftaufnahme (20, 20', 20") aufgenommen wird und Druckkräfte vom druckfester Dämmkörper (18, 18', 18") aufgenommen werden, und dass das Grundprofil (10) so ausgebildet ist, dass die Einschubplatte oder die Einschubplatten (14, 14', 14") verschieblich im Grundprofil (10) gelagert ist oder sind, wobei das Element zur Zugkraftaufnahme (20, 20', 20") mit dem an dem druckfesten Dämmkörper (18, 18', 18") anzuordnenden Anschlusselement (16, 16', 16") direkt oder über eine Verbindungshülse (38, 38', 38") verbunden ist, wobei der druckfeste Dämmkörper (18, 18', 18") ein druckfestes Abstandselement ist, das eine thermische Trennfunktion übernimmt, wobei die Einschubplatte (14, 14', 14") innerhalb des Grundprofils (10) anordenbar ist,
**dadurch gekennzeichnet, dass** zwischen dem Grundprofil (10) und der Einschubplatte (14, 14', 14") mindestens ein thermisches Trennelement (21, 21', 21", 21'", 42, 42') angeordnet ist und dass das mindestens eine thermische Trennelement (21, 21', 21", 21'", 42, 42') U-förmig, L-förmig, flach, gewinkelt, ein- oder mehrteilig ausgebildet ist.

2. Verbindungssystem (100) nach Anspruch 1, **dadurch gekennzeichnet, dass** der druckfeste Dämmkörper (18, 18', 18") ein- oder mehrteilig ausgebildet ist.

3. Verbindungssystem (100) nach einem der vorhergehenden Ansprüche, **dadurch gekennzeichnet, dass** die Einschubplatte (14, 14', 14") ein Loch oder mehrere Löcher aufweist, wobei mindestens ein Loch (22, 22', 22n) dazu ausgebildet ist, das Element zur Zugkraftaufnahme (20, 20', 20'") aufzunehmen.

4. Verbindungssystem (100) nach einem der vorhergehenden Ansprüche, **dadurch gekennzeichnet, dass** das Element zur Zugkraftaufnahme (20, 20', 20'") ein-oder mehrteilig ausgebildet ist.

5. Verbindungssystem (100) nach Anspruch 4, **dadurch gekennzeichnet, dass** das Element zur Zugkraftaufnahme (20, 20', 20") eine Verbindungshülse (38, 38', 38") zur Aufnahme eines Verbindungsmittels (46, 46') aufweist.

6. Verbindungssystem (100) nach Anspruch 5, **dadurch gekennzeichnet, dass** innerhalb der Verbindungshülse (38, 38', 38") ein Luftraum (66) ausgebildet oder ein thermisches Füllelement angeordnet ist.

7. Verbindungssystem (100) nach einem der vorhergehenden Ansprüche, **dadurch gekennzeichnet, dass** das Grundprofil (10) mindestens eine Nase (48, 48') zur Stabilisierung und/oder Führung der thermischen Trennelemente (21, 21', 21", 21''', 42, 42') aufweist.

8. Verbindungssystem (100) nach einem der vorhergehenden Ansprüche, **dadurch gekennzeichnet, dass** das Anschlusselement (16, 16', 16"), das mit der Einschubplatte (14, 14', 14") verbindbar ist, eine Leuchte, eine Markise oder eine Halterung für Anbauteile ist.

9. Verbindungssystem (100) nach einem der vorhergehenden Ansprüche 1 bis 7, **dadurch gekennzeichnet, dass** das Anschlusselement (16, 16', 16") an mehreren Einschubplatten (14, 14', 14") befestigt ist, die horizontal nebeneinander angeordnet sind, und dadurch Bestandteile eines Geländersystems oder eines Vordachs sind.

10. Verbindungssystem (100) nach einem der vorhergehenden Ansprüche 1 bis 7, **dadurch gekennzeichnet, dass** das Anschlusselement (16, 16', 16") an mehreren Einschubplatten (14, 14', 14"), die vertikal übereinander angeordnet sind, befestigt ist und dadurch Fassadenelemente, Windfanganlagen, französische Balkone, Ganzglasgeländer, Geländerprofile oder Brüstungselemente ausgebildet sind.

11. Verwendung des Verbindungssystems (100) nach einem der Ansprüche 1 bis 10 für die Anordnung von Anschlusselementen (16, 16', 16") an wärmegedämmten Fassaden von Gebäuden.

## Claims

1. A connection system (100) for connecting an attachment element (16) to a building or a substructure (56), wherein a base profile (10) is connected to the building or the substructure (56) by fastening means (12, 12n), and the base profile (10) comprises at least one insertion plate (14, 14', 14") which is connectable to the attachment element (16) by way of an element for absorbing tensile force (20, 20', 20"), and that a pressure-resistant insulating body (18, 18', 18") is arranged between the base profile (10) and the attachment element (16), so that a force couple is produced in which the tensile force is absorbed by the element for absorbing tensile force (20, 20', 20") and pressure forces are absorbed by the pressure-resistant insulating body (18, 18', 18"), and in that the base profile (10) is designed such that the insertion plate or insertion plates (14, 14', 14") is or are mounted in the base profile (10) so as to be displaceable, wherein the element for absorbing tensile force (20, 20', 20") is connected to the attachment element (16, 16', 16") which is to be arranged on the pressure-resistant insulating body (18, 18', 18") directly or by way of a connection sleeve (38, 38', 38"), wherein the pressure-resistant insulating body (18, 18', 18") is a pressure-resistant spacer element which takes on a thermal separating function, wherein the insertion plate (14, 14', 14") is arrangeable within the base profile (10),
**characterised in that** at least one thermal separating element (21, 21', 21", 21'", 42, 42') is arranged between the base profile (10) and the insertion plate (14, 14', 14"), and **in that** the at least one thermal separating element (21, 21', 21", 21''', 42, 42') is designed in a U-shape, in an L-shape, flat, angled, in one part or multiple parts.

2. A connection system (100) according to Claim 1, **characterised in that** the pressure-resistant insulating body (18, 18', 18") is configured in one part or multiple parts.

3. A connection system (100) according to one of the preceding claims, **characterised in that** the insertion plate (14, 14', 14") comprises a hole or a plurality of holes, wherein at least one hole (22, 22', 22n) is designed to receive the element for absorbing tensile force (20, 20', 20"').

4. A connection system (100) according to one of the preceding claims, **characterised in that** the element for absorbing tensile force (20, 20', 20'") is configured in one part or multiple parts.

5. A connection system (100) according to Claim 4, **characterised in that** the element for absorbing tensile force (20, 20', 20") comprises a connection sleeve (38, 38', 38") for receiving a connection means (46, 46').

6. A connection system (100) according to Claim 5, **characterised in that** within the connection sleeve (38, 38', 38") is formed an air space (66) or is arranged a thermal filling element.

7. A connection system (100) according to one of the preceding claims, **characterised in that** the base profile (10) comprises at least one lug (48, 48') for stabilising and/or guiding the thermal separating elements (21, 21', 21", 21'", 42, 42').

8. A connection system (100) according to one of the preceding claims, **characterised in that** the attachment element (16, 16', 16") which can be connected to the insertion plate (14, 14', 14") is a lamp, an awning or a bracket for attachment parts.

9. A connection system (100) according to one of the preceding Claims 1 to 7, **characterised in that** the attachment element (16, 16', 16") is fastened to a plurality of insertion plates (14, 14', 14") which are arranged horizontally next to one another, and thereby are integral parts of a railing system or a canopy.

10. A connection system (100) according to one of the preceding Claims 1 to 7, **characterised in that** the attachment element (16, 16', 16") is fastened to a plurality of insertion plates (14, 14', 14") which are arranged vertically one on top of the other, and thereby facade elements, wind screening systems, French balconies, all-glass balustrades, railing profiles or parapet elements are formed.

11. Use of the connection system (100) according to one of Claims 1 to 10 for arranging attachment elements (16, 16', 16") on thermally insulated facades of buildings.

## Revendications

1. Système de liaison (100) servant à relier un élément de raccordement (16) à un bâtiment ou à une sous-structure (56), dans lequel un profil de base (10) est relié au bâtiment ou à la sous-structure (56) par des moyens de fixation (12, 12n), et le profil de base (10) présente au moins une plaque à enfiler (14, 14', 14"), qui peut être reliée par l'intermédiaire d'un élément d'absorption de force de traction (20, 20', 20") à l'élément de raccordement (16), et qu'un corps isolant (18, 18', 18") résistant à la pression est disposé entre le profil de base (10) et l'élément de raccordement (16) de sorte qu'une paire de forces se forme, pour laquelle la force de traction est absorbée par l'élément d'absorption de force de traction (20, 20', 20") et des forces de pression sont absorbées par le corps isolant (18, 18', 18") résistant à la pression, et que le profil de base (10) est réalisé de telle sorte que la plaque à enfiler ou les plaques à enfiler (14, 14', 14") est montée ou sont montées de manière à pouvoir coulisser dans le profil de base (10), dans lequel l'élément d'absorption de force de traction (20, 20', 20") est relié à l'élément de raccordement (16, 16', 16") à disposer au niveau du corps isolant (18, 18', 18") résistant à la pression directement ou par l'intermédiaire d'une douille de liaison (38, 38', 38"), dans lequel le corps isolant (18, 18', 18") résistant à la pression est un élément d'espacement résistant à la pression, qui assure une fonction de coupure thermique, dans lequel la plaque à enfiler (14, 14', 14") peut être disposée à l'intérieur du profil de base (10), **caractérisé en ce qu'**au moins un élément de séparation(21, 21', 21", 21'", 42, 42') thermique est disposé entre le profil de base (10) et la plaque à enfiler (14, 14', 14"), et que l'au moins un élément de séparation (21, 21', 21", 21"', 42, 42') thermique est réalisé en forme de U, en forme de L, de manière plate, de manière coudée, en une ou plusieurs parties.

2. Système de liaison (100) selon la revendication 1, **caractérisé en ce que** le corps isolant (18, 18', 18") résistant à la pression est réalisé en une ou plusieurs parties.

3. Système de liaison (100) selon l'une quelconque des revendications précédentes, **caractérisé en ce que** la plaque à enfiler (14, 14', 14") présente un trou ou plusieurs trous, dans lequel au moins un trou (22, 22', 22n) est réalisé pour loger l'élément d'absorption de force de traction (20, 20', 20''').

4. Système de liaison (100) selon l'une quelconque des revendications précédentes, **caractérisé en ce que** l'élément d'absorption de force de traction (20, 20', 20"') est réalisé en une ou plusieurs parties.

5. Système de liaison (100) selon la revendication 4, **caractérisé en ce que** l'élément d'absorption de force de traction (20, 20', 20") présente une douille de liaison (38, 38', 38") servant à loger un moyen de liaison (46, 46').

6. Système de liaison (100) selon la revendication 5, **caractérisé en ce qu'**un espace d'air (66) est réalisé ou un élément de remplissage thermique est disposé à l'intérieur de la douille de liaison (38, 38', 38").

7. Système de liaison (100) selon l'une quelconque des revendications précédentes, **caractérisé en ce que** le profil de base (10) présente au moins un ergot (48, 48') servant à la stabilisation et/ou au guidage des éléments de séparation (21, 21', 21", 21"', 42, 42') thermiques.

8. Système de liaison (100) selon l'une quelconque des revendications précédentes, **caractérisé en ce que** l'élément de raccordement (16, 16', 16"), qui peut être relié à la plaque à enfiler (14, 14', 14"), est un système d'éclairage, une marquise ou un support pour des composants rapportés.

9. Système de liaison (100) selon l'une quelconque des revendications 1 à 7, **caractérisé en ce que** l'élément de raccordement (16, 16', 16") est fixé au niveau de plusieurs plaques à enfiler (14, 14', 14"), qui sont disposées côte à côte de manière horizontale et font ainsi partie intégrante d'un système de rambarde ou d'un auvent.

10. Système de liaison (100) selon l'une quelconque des revendications 1 à 7, **caractérisé en ce que** l'élément de raccordement (16, 16', 16") est fixé au niveau de plusieurs plaques à enfiler (14, 14', 14"), qui sont disposées les unes au-dessus des autres de manière verticale, et ainsi des éléments de façade, des installations formant paravents, des balcons à la française, des rambardes en verre, des profils de rambarde ou des éléments de parapet sont réalisés.

11. Utilisation du système de liaison (100) selon l'une quelconque des revendications 1 à 10 pour la disposition d'éléments de raccordement (16, 16', 16") au niveau de façades à isolation thermique de bâtiments.
